# FASCICULE DE BREVET EUROPEEN

(11) **EP 0 425 396 B1**
(45) Date de publication et mention de la délivrance du brevet: **30.11.1994**
(21) Numéro de dépôt: 90420462.5
(22) Date de dépôt: 26.10.1990
(51) Int. Cl.: B03B 9/06, B07B 13/00

(54) **Procédé de traitement de déchets pour la récupération de matière organique et dispositif pour sa mise en oeuvre**
Verfahren und Vorrichtung zur Behandlung von Abfallstoffen für die Rückgewinnung von organischem Material
Method and device for treating waste in order to recover organic material

(30) Priorité: 27.10.1989 FR 8914615
(43) Date de publication de la demande: 02.05.1991
(73) Titulaire: SOCIETE DE VALORISATION DES DECHETS-TECHNOLOGIES, F-26230 Grignan (FR)
(72) Inventeur: Bouche, Marcel, F-34000 Montpellier (FR)
(74) Mandataire: Guerre, Dominique

(56) Documents cités:
- EP-A- 0 008 621
- EP-A- 0 170 301
- DE-A- 2 517 487
- FR-A- 1 300 408
- FR-A- 2 345 230
- US-A- 3 599 788

## Description

La présente invention a pour objet un procédé de traitement de déchets pour la récupération de matière organique et un dispositif pour sa mise en oeuvre.

On entend par déchets toute partie d'une matière rejetée comme inutilisable ou inconsommable provenant d'usage domestique ou industriel.

Différents procédés de traitement de ces déchets sont connus actuellement.

Ces déchets peuvent être, soit mis directement ou après avoir subi un prétraitement de broyage et/ou de compostage en décharge, ce qui, d'une part, pose un problème de pollution, notamment des nappes phréatiques et, d'autre part, nuit considérablement à la beauté de l'environnement de la nature du site où se trouve située cette décharge, soit être Incinérés dans une unité d'incinération adaptée aux traitements de tels déchets.

Toutefois, cette dernière solution entraîne la production de résidus de combustion, sous forme de cendres volantes très pulvérulentes, en quantité relativement importante, qui risquent de polluer les nappes phréatiques des sites où elles sont stockées en raison de la nature des composés chimiques, tels que des métaux lourds très toxiques, qu'elles contiennent.

Enfin, ces déchets sont quelquefois utilisés pour la production de méthane ou sont éventuellement compostés ou lombricompostés dans le cas de déchets en matière organique.

Or, afin de pouvoir utiliser les lombriciens pour effectuer un lombricompostage, c'est à dire une action synergique de dégradation et d'aération par les micro-organismes et par les lombriciens ou vers de terre, il est nécessaire d'avoir un substrat de déchets qui ne contienne pas d'éléments indésirables ou parasitaires, tels que par exemple du verre ou des matières synthétiques broyées.

Les techniques actuellement utilisées, pour le traitement de déchets ont généralement recours à des dispositifs très complexes et très consommateurs d'énergie qui comportent différents moyens de broyage tels que des couteaux, dents, barres et autres similaires et qui ne peuvent, dans le cas de déchets hétérogènes, permettre d'obtenir une sélection des produits réellement utilisables et un calibrage adapté de ces produits de manière à autoriser leur traitement ultérieur par compostage ou lombricompostage, notamment en évitant la pulvérisation des verres.

Par le document DE-A-25 17 487, on connait un tambour rotatif pour installation de traitement d'ordures ménagères ouverts à ses deux extrémités et comportant des éléments de coupe chauffés électriquement et fixés sur sa périphérie intérieure et auxquels sont associés des moyens de raclage.

L'installation décrite dans ce document est conçue pour traiter des déchets industriels et non des ordures ménagères conditionnées dans des sacs en matière plastique. En conséquence, elle comprend des postes de triage manuel et mécanique inutiles pour les ordures ménagères et rien n'est prévu pour l'ouverture absolument sûre de sacs en matière plastique contenant de telles ordures.

Par le document FR-A-1 300 408, qui décrit le préambule de la revendication 3, on connaît un appareil de traitement d'ordures ménagères comprenant un tambour animé d'un lent mouvement de rotation autour de son axe légèrement incliné, dont la paroi présente des perforations et à l'intérieur duquel sont prévus des moyens pour broyer et déchiqueter certaines ordures, des tapis sans fin étant disposés sous les zones perforées de la paroi du tambour pour évacuer les déchets qui les ont traversées.

Dans cet appareil, rien n'est prévu pour oeuvrer de façon sûre, sur toute leur longueur, des sacs en matière plastique dans lesquels les ordures ménagères ont été préalablement stockées et transportées, de sorte que ces sacs sont déchiquetés comme les ordures, sans être séparés d'elles. En outre, rien n'est prévu pour éliminer les déchets non organiques comme les métaux, le verre ou similaires qui restent mélangés aux ordures ménagères.

La présente invention vise à remédier à ces inconvénients en fournissant un procédé de traitement de déchets et un dispositif pour sa mise en oeuvre qui permettent une élimination des déchets non désirables, un calibrage des déchets utiles, et une humidification optimale de ces déchets, tout en étant simple à réaliser, et facile à mettre en oeuvre.

A cet effet, ce procédé de traitement de déchets consiste :
- à introduire par des moyens mécaniques adaptés le substrat de déchets à traiter, dans un tambour rotatif de traitement,
- à ouvrir par fusion thermique les divers emballages contenant ce substrat,
- à séparer par criblage les éléments fins de ce substrat,
- à fragmenter les résidus grossiers du premier calibrage,
- à séparer par criblage ces résidus,
- à séparer par tri magnétique l'ensemble des fragments criblés,
- à humidifier ces fragments criblés,
- à trier par rebond différentiel et collage aqueux ces fragments,
- à évacuer par des moyens mécaniques le substrat de déchets criblés.

Cela permet d'obtenir un procédé dans lequel est effectué un tri des différents déchets susceptibles d'être compostés ou lombricompostés.

De plus, ces déchets, grâce à la fragmentation qu'ils subissent, ont une dimension adaptée à un traitement ultérieur, ce qui augmente le rendement de ce traitement.

Enfin, la phase d'humidification de ce procédé permet d'avoir une répartition uniforme et selon un seuil désiré de l'humidité de ce substrat de déchets à lombricomposter, évitant ainsi tout phénomène désagréable de fermentation anaérobie.

Grâce à l'utilisation de moyens mécaniques adaptés pour l'introduction et l'évacuation de ces déchets, ce procédé peut fonctionner de manière continue, avec et selon un débit variable, en fonction de la nature des déchets à traiter.

Selon une forme préférentielle de mise en oeuvre, le procédé consiste :
- à introduire par des moyens mécaniques adaptés le substrat de déchets à traiter à l'extrémité d'entrée d'un tambour rotatif,
- à ouvrir par fusion thermique les divers emballages contenant ce substrat,
- à séparer par criblage les éléments fins de ce substrat,
- à fragmenter les résidus grossiers du premier calibrage,
- à séparer par criblage ces résidus,
- à séparer par tri-magnétique l'ensemble des fragments criblés,
- à humidifier ces fragments criblés,
- à trier par rebond différentiel et collage aqueux ces fragments,
- à évacuer par des moyens mécaniques le substrat de déchets criblés à l'extrémité de sortie du tambour rotatif.

Selon une forme de réalisation simple de l'invention, le dispositif pour la mise en oeuvre de ce procédé comprend en combinaison une trémie, à l'intérieure de laquelle est disposé un tambour rotatif dont les deux extrémités d'entrée et de sortie sont ouvertes et dont la paroi comporte une pluralité d'orifices régulièrement ménagés suivant des génératrices de ce tambour, des moyens mécaniques pour introduire, dans ce tambour et par son extrémité entrée, les emballages contenant le substrat de déchets à traiter, des moyens de chauffage disposés à l'extrémité amont du tambour rotatif de manière à permettre l'ouverture des emballages par fusion thermique, des moyens mécaniques de fragmentation disposés à l'extrémité aval du tambour, des moyens de séparation des déchets et des moyens d'humidification disposés sous l'extrémité de sortie du tambour, et des moyens d'évacuation de ces déchets traités.

Selon une caractéristique de l'invention, les moyens pour introduire le substrat de déchets à traiter dans le tambour sont constitués par un transporteur à bande dont l'une des extrémités est située en regard de l'orifice d'entrée du tambour rotatif.

Ce type de transporteur est particulièrement bien adapté car il favorise, en fonction du réglage de son débit, l'introduction de manière continue du substrat de déchets.

Avantageusement, les moyens pour évacuer les déchets traités sont constitués par un transporteur à bande, situé sous la base du tambour rotatif, et dont l'une des extrémités est placée au-dessus du moyen d'humidification.

Ce type de transporteur permet une régulation de l'évacuation du substrat de déchets traités en phase avec celle correspondant à leur introduction dans le tambour rotatif.

Selon une forme de réalisation de l'invention, les parois du tambour comportent une pluralité d'orifices régulièrement espacés et disposés suivant les génératrices de ce tambour et dont la dimension et la forme sont telles qu'elles permettent un calibrage du substrat de déchets à traiter.

Suivant une première forme d'exécution du dispositif, les moyens mécaniques de chauffage sont constitués par des tubes, fixés à la surface interne de la partie amont du tambour, suivant des génératrices de ce tambour décalées de celles où sont ménagés des orifices, chacun de ces tubes comportant des éléments électriquement résistifs.

Suivant une autre forme d'exécution du dispositif, les moyens mécaniques de chauffage sont constitués par des tubes dans lesquels circule un fluide caloporteur.

Quel que soit le mode d'apport de l'énergie calorifique, la forme, la nature et le nombre des éléments chauffants peuvent varier en fonction de la nature des emballages à ouvrir.

Afin d'obtenir des températures comprises dans la plage thermique de celle de transition vitreuse de la matière synthétique, c'est à dire celle à laquelle ce matériau synthétique perd sa consistance et sa rigidité pour se ramollir et se transformer en fragments, il est prévu un dispositif de régulation électronique.

Avantageusement, ces éléments chauffants permettent d'assurer une première sélection des déchets à traiter, dans la mesure où toutes les substances synthétiques contenues dans les déchets se trouvant à proximité de ces éléments chauffants, vont subir le même traitement thermique.

Afin d'éviter le collage de ces matières synthétiques sur les éléments chauffants, une chaîne sans fin, munie de dents, est placée dans un carter de profil adapté, dans la partie amont du tambour parallèlement aux éléments chauffants, de manière à permettre l'arrachage de ces fragments et leur entraînement à l'extérieur du tambour, de telle façon qu'ils ne tombent pas sur les moyens mécaniques d'entraînement des déchets traités et calibrés.

Selon une caractéristique de l'invention, une brosse, placée dans la partie amont du tambour, permet de nettoyer les éventuels fragments de matière synthétique qui n'auraient pas été arrachés.

Selon une autre caractéristique de l'invention, un brûleur, dont la température est adaptée, est disposé à l'extrémité amont du tambour de manière à détruire les fragments de matière synthétique.

Selon une forme d'exécution de l'invention, les moyens mécaniques de broyage, de matière légère offrant la plus grande densité tout en ayant une surface de contact importante, sont constitués par au moins deux arbres rotatifs situés dans la partie aval du tambour rotatif, l'un portant des fouets collecteurs régulièrement disposés sur toute sa longueur, l'autre, placé par rapport au premier de telle manière qu'il évite tout contact avec ce premier axe, portant des couteaux faisant saillie et régulièrement disposés sur toute sa longueur.

Ce broyage vise à permettre une réduction de la taille des déchets, en matériaux légers de taille importante, de manière à autoriser leur sortie par les orifices calibrés de la paroi du tambour, tout en assurant une sélection des différents déchets à traiter.

A cet effet, les fouets attaquent latérale ment les matériaux hétérogènes et de ce fait ils permettent un entraînement différentiel des matières légères ayant une surface de contact importante.

Afin de permettre une meilleure séparation des matériaux légers des matériaux plus lourds à broyer, l'axe sur lequel sont fixés les fouets a une vitesse de rotation différente de celle de l'axe sur lequel sont fixés les couteaux.

Avantageusement, la distance relative existant entre chaque fouet et chaque couteau occupant une disposition en quinconce est telle qu'elle autorise un broyage calibré des matériaux de manière à permettre leur sortie ultérieure par les orifices correspondants ménagés dans la paroi du tambour.

Selon une autre caractéristique intéressante de l'invention, les fouets sont réalisés en un matériau souple et élastique.

Avantageusement, ce matériau souple et élastique est un fil d'acier torsadé.

Selon une variante d'exécution, l'extrémité de chaque fouet est munie de massette terminale.

La massette terminale de chaque fouet permet de modifier l'énergie cinétique accumulée par la rotation de ce fouet, et de ce fait augmente son aptitude à l'accrochage des déchets plus ou moins légers.

De plus, elle permet de maintenir l'intégrité des constituants des fils d'acier, évitant ainsi tout phénomène d'effilochage.

Il est à noter qu'il est aussi possible de disposer régulièrement, espacées sur toute la longueur des fouets, des massettes réalisées dans le même matériau que celui cité précédemment.

Selon une variante d'exécution, les fouets ont une longueur croissante depuis l'extrémité la plus proche des éléments chauffants jusqu'à celle en regard de l'ouverture de sortie du tambour rotatif.

Ce type de fouets permet d'avoir une attaque différentielle des différents déchets légers à traiter, en fonction du défilement des matériaux hétérogènes, les fouets les plus courts ne produisant qu'un effet superficiel.

Selon une caractéristique de l'invention, des moyens mécaniques de tri magnétique, situés à l'extrémité du transporteur à bande qui convoie les déchets traités et calibrés, permettent de retenir d'éventuelles particules métalliques qui sont indésirables pour l'opération ultérieure de lombricompostage.

Selon une autre caractéristique de l'invention, un dispositif d'humidification différentielle, situé sous le dispositif de tri magnétique, permet une humidification des déchets calibrés sous la forme de particules, par l'intersection de la trajectoire rectiligne de ces particules qui tombent sous l'effet de la gravité avec le cône du flux de liquide émis, suivant un angle et avec une trajectoire parabolique, par une buse.

Ce type d'humidificateur permet d'obtenir une humidification qui est bien répartie et qui est adaptée aux opérations ultérieures de traitement de la matière organique.

De plus, l'utilisation de l'énergie cinétique des particules de liquide permet d'obtenir une déviation des particules de déchets en fonction de la densité des matériaux, ce qui favorise leur sélection ultérieure.

Selon une autre caractéristique de l'invention, des moyens mécaniques de réception et d'évacuation constitués par un tapis roulant incliné d'un angle avec la verticale, reçoivent les particules de manière à permettre le rebond differentiel de ces particules les plus lourdes suivant le même angle vers l'aval, tandis que les particules les plus légères, et qui ont une grande surface d' humidification, plus importante, viennent se coller sur ce tapis et sont entraînées vers l'extrémité amont de celui-ci.

Avantageusement, un séparateur constitué par une plaque recourbée permet, en fonction des diverses fractions plus ou moins collées à la surface du tapis roulant, une meilleure séparation des déchets traités.

De toute façon, l'invention sera bien comprise à l'aide de la description qui suit, en référence au dessin schématique annexé représentant, à titre d'exemples non limitatifs, plusieurs formes de réalisation du dispositif pour la mise en oeuvre du procédé de traitement de déchets.
Figure 1 est une vue générale, d'un dispositif ;
Figure 2 en est une vue en coupe longitudinale suivant la ligne II-II de la figure 1 ;
Figure 3 en est une vue en coupe transversale suivant la ligne III-III de la figure 2 ;
Figures 4 et 5 représentent des variantes de réalisation des fouets ;
Figure 6 est une vue schématique de la position relative des arbres portant les fouets et des arbres portant les couteaux.

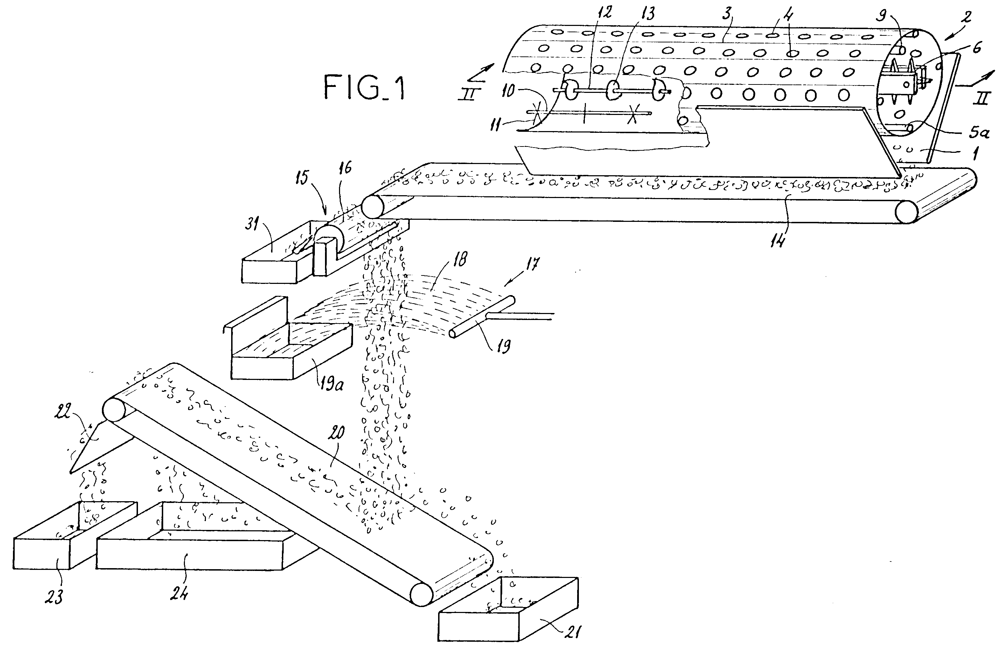

Les figures 1 à 3 montrent, vu sous différents angles, le dispositif pour le traitement des déchets selon l'invention.

Ce dispositif pour la mise en oeuvre du procédé selon l'invention, comprend une trémie 1 incurvée à l'intérieur de laquelle se trouve un tambour rotatif 2, actionné par des moyens mécaniques adaptés, non représentés sur ces figures, dont les extrémités d'entrée et de sortie sont ouvertes, et dont la paroi périphérique 3 comporte une pluralité d'orifices 4 régulièrement ménagés selon des génératrices.

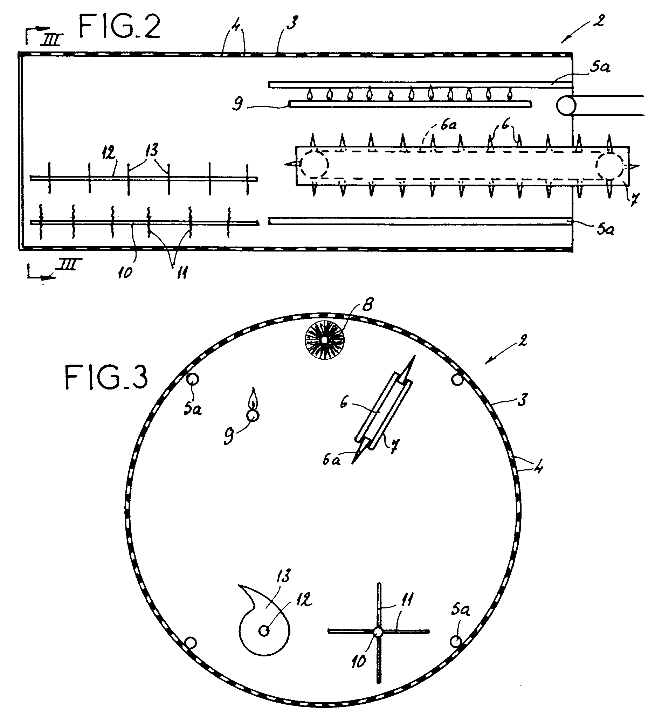

Disposés suivant des génératrices décalées de celles sur les-quelles sont ménagés les orifices 4 dans la paroi du tambour rotatif 2, quatre éléments chauffants 5a, comme mieux représenté à la figure 3, sont fixés dans la partie amont sur la face interne du tambour rotatif de manière à permettre l'ouverture par fusion thermique des emballages en matière synthétique contenant les déchets à traiter.

Comme mieux représenté aux figures 2 et 3, une chaîne 6, disposée dans la partie amont du tambour, et placée dans un carter 7 de profilé adapté, comporte des dents 6a de manière à permettre l'accrochage des fragments de matière synthétique qui restent collés sur les éléments chauffants 5a et à les entraîner vers l'extérieur du tambour rotatif de manière à éviter leur mélange avec les déchets traités et calibrés.

Comme montré aux figures 2 et 3, une brosse 8, placée dans la partie amont du tambour rotatif 2, est disposée de telle manière à éviter tout contact avec les éléments chauffants 5, et permet de nettoyer les différents fragments de matière synthétique qui sont collés sur les éléments chauffants 5a.

Un brûleur 9, comme montré plus particulièrement aux figures 2 et 3, est placé dans la partie amont du tambour rotatif 2, de façon à brûler les fragments de matière synthétique qui ne seraient pas arrachés par la chaîne 6. Ce brûleur 9 est agencé de manière connue et disposé de façon à éviter tout contact avec les éléments chauffants 5a et la brosse 8.

Dans la partie aval du tambour rotatif 2, un arbre rotatif 10, actionné par des moyens mécaniques non représentés, comporte des fouets 11 régulièrement disposés sur toute sa longueur, de manière à permettre une attaque hétérogène des matériaux légers. Disposé parallèlement à ce premier arbre rotatif 10, un second arbre rotatif 12, actionné par des moyens mécaniques non représentés sur ces figures, supporte des couteaux 13 régulièrement disposés sur toute la longueur et disposés en quinconce par rapport aux fouets 11, comme mieux représenté à la figure 8. La distance entre ces fouets et les couteaux 13 est telle qu'elle permet un calibrage des déchets assurant leur passage ultérieur par les orifices ménagés dans la paroi du tambour rotatif 2.

Un transporteur à bande 14 placé sous la base de la trémie 1, récupère les fragments calibrés de déchets. Ce transporteur 14 a une course telle que son extrémité se situe au-delà de l'extrémité aval du tambour rotatif 2 de manière à permettre l'évacuation des déchets triés et calibrés. Sous l'extrémité de ce transporteur 14 un dispositif de tri magnétique 15 constitué par un rouleau 16 en substance ferromagnétique permet de récupérer les différents fragments métalliques contenus dans le substrat calibré. Ces déchets sont ensuite récupérés dans un conteneur 31 par des moyens mécaniques adaptés non représentés sur la figure 1.

Sous le dispositif de tri-magnétique 15, un dispositif d'humidification 17 permet une humidification homogène des particules selon un seuil d'humidité adapté grâce à l'intersection du cône de fluide 18 émis par la buse 19 et du volume du substrat de déchets traités et calibrés, sous forme de particules, tombant suivant une trajectoire rectiligne sous l'effet de la gravité. Un conteneur 19a déplaçable est situé à une distance adaptée pour récupérer l'excès de liquide.

Enfin, sous le dispositif d'humidification différentielle 17 un tapis roulant 20, incliné d'un angle avec la verticale, reçoit les particules les plus légères qui vont se coller à la surface et vont être transportées vers son extrémité amont, tandis que les particules les plus lourdes rebondissent beaucoup plus haut suivant un même angle et sont récupérées dans une cuve 21.

Une tôle métallique incurvée, constituant un séparateur 22, permet de séparer les particules suivant leur collage à la surface du tapis 20. Une cuve 23 est disposée de manière a récupérer la fraction la plus collée sous le tapis 20 tandis qu'une autre cuve 24 récupère après le séparateur les particules les moins adhérées.

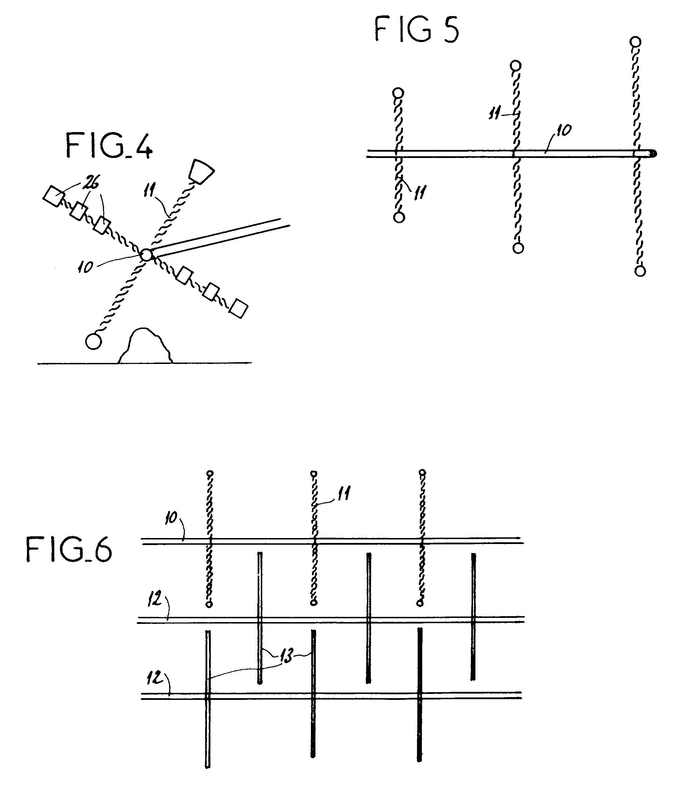

La figure 4 représente une forme particulière de fouets 11 réalisés en un matériau souple, dont les extrémités sont terminées par des massettes 26 de formes diverses, telles que carrée, ronde ou tronconique.

Dans le cas où la conformation des massettes 26 est carrée, trois de celles-ci sont régulièrement disposées sur toute la longueur du fouet 11 de manière à modifier l'énergie cinétique de ces fouets et de ce fait à augmenter leur aptitude à l'accrochage des déchets.

La figure 4 représente une variante d'exécution dans laquelle la dimension des fouets 11 est croissante de l'une à l'autre des extrémités de l'arbre qui les supporte. Cette conformation est particulièrement bien adaptée car elle permet d'avoir une attaque différentielle des divers éléments légers à traiter, les fouets les plus courts ne produisant qu'un effet superficiel.

Le procédé de traitement de déchets se déroule comme décrit ci-dessous.

Introduction de façon continue, ou éventuellement selon une périodicité préétablie, de déchets hétérogènes situés ou non dans des emballages en matière plastique à l'extrémité amont d'un tambour rotatif 2 dont les parois 3 comportent, régulièrement espacés, des orifices 4 de calibre adapté. Cette introduction est effectuée par un moyen mécanique adapté, non représenté sur les figures. Les emballages sont ouverts par les barres chauffantes par phénomène de fusion thermique entraînant de cette manière une première sélection des matières plastiques qu'ils contiennent puisque une partie de celles-ci subissent le même traitement thermique. Toutes ces matières plastiques, sous forme fragmentée, sont arrachées par une chaîne et évacuées vers l'extérieur ou brûlées par un brûleur à l'intérieur du tambour rotatif.

Les déchets, ayant une taille suffisante, passent par criblage à travers les orifices 4 de la paroi 3 du tambour rotatif 2, tandis que les autres sont fragmentés par des couteaux 13 disposés sur des arbres rotatifs 12 et homogénisés par des fouets 11 portés par des autres arbres rotatifs 10 parallèlement aux premiers 12 cités, les couteaux 13 étant disposés en quinconce par rapport aux fouets 11. La distance relative entre ces couteaux 13 et ces fouets 11 est telle qu'elle permet d'obtenir une division du substrat adapté à sa sélection par les orifices 4 du tambour rotatif 2.

Les déchets calibrés et tries sont transportés par un transporteur à bande sous la base de la trémie jusqu'à l'une de son extrémité où ils sont soumis à un tri magnétique.

Après avoir subi ce tri, où les particules métalliques sont retirées, les particules de déchets calibrés tombent par gravité et sont humectées par un humidificateur 17. A la sortie de cet humidificateur 17, elles sont déviées par l'énergie cinétique des gouttelettes lors de leur contact avec les gouttelettes de liquide et sont soumis au tri par rebond ou collage sur un transporteur à bande 20 incliné d'un angle de l'horizontal. Les particules les plus lourdes rebondissent suivant les mêmes angles, tandis que les particules les plus légères et celles offrant la surface de collage la plus importante sont convoyées vers l'extrémité de ce transporteur avant d'être séparées par un séparateur 22 en fonction de leur aptitude à rester coller à la surface de ce transporteur 20.

Comme il va de soi, l'invention ne se limite pas à la seule forme de réalisation du procédé de traitement de déchets et du dispositif pour sa mise en oeuvre qui ont été décrits ci-dessus à titre d'exemple non limitatif, elle en embrasse au contraire toutes les variantes de réalisation et d'application en respectant le même principe tel que défini dans les revendications.

C'est ainsi que l'on ne s'éloignera pas du cadre de l'invention par une modification de la forme de la trémie, de la dimension des orifices, du nombre, de la forme et de la répartition des éléments chauffants, et des arbres comportant les fouets et les couteaux, ainsi que du dispositif de tri magnétique utilisé.

## Revendications

1. Procédé de traitement de déchets pour la récupération de matières organiques consistant :
- à introduire, par des moyens mécaniques adaptés, le substrat de déchets à traiter, dans un tambour rotatif de traitement,
- à ouvrir, par fusion thermique, les divers emballages contenant ce substrat,
- à séparer, par criblage, les éléments fins de ce substrat,
- à fragmenter sélectivement les résidus grossiers du premier calibrage,
- à séparer, par criblage, ces résidus,
- à séparer, par tri magnétique, l'ensemble des fragments criblés,
- à humidifier ces fragments criblés,
- à trier, par rebond différentiel et collage aqueux, ces fragments et
- à évacuer, par des moyens mécaniques, le substrat de déchets criblés.

2. Procédé selon la revendication 1, caractérisé en ce qu'il consiste :
- à introduire, par des moyens mécaniques adaptés, le substrat de déchets à traiter à l'extrémité d'entrée d'un tambour rotatif,
- à ouvrir, par fusion thermique, les divers emballages contenant ce substrat,
- à séparer, par criblage, les éléments fins de ce substrat,
- à fragmenter les résidus grossiers du premier calibrage, susceptibles de l'être,
- à séparer, par criblage, ces résidus,
- à séparer, par tri magnétique, l'ensemble des fragments criblés,
- à humidifier ces fragments criblés,
- à trier, par rebond différentiel et collage aqueux, ces fragments,
- à évacuer, par des moyens mécaniques, le substrat de déchets criblés, à l'extrémité de sortie du tambour rotatif.

3. Dispositif pour le traitement de déchets pour la récupération de matières organiques, du type comprenant, en combinaison, un tambour animé d'un mouvement de rotation autour de son axe, dont la paroi présente des perforations régulièrement ménagées suivant des génératrices de ce tambour et à l'intérieur duquel sont prévus des moyens pour broyer et déchiqueter certaines ordures, un tapis sans fin étant disposés sous la paroi perforée du tambour pour évacuer les déchets qui les ont traversées, caractérisé en ce que le tambour rotatif (2) est placé à l'intérieur d'une trémie (1), en ce qu'il comporte, en autre, des moyens mécaniques pour introduire, dans le tambour (2) et par son extrémité entrée ouverte, les emballages contenant le substrat de déchets à traiter, des moyens de chauffage (5) disposés à l'intérieur de l'extrémité amont du tambour rotatif (2) de manière à permettre l'ouverture des emballages par fusion thermique, des moyens mécaniques de fragmentation (11,13) disposés à l'intérieur du tambour (2) et à proximité de son extrémité aval, des moyens de séparation des déchets et des moyens d'humidification (17) disposés sous l'extrémité de sortie ouverte du tambour, et des moyens d'évacuation de ces déchets traités.

4. Dispositif selon la revendication 3, caractérisé en ce que les moyens pour introduire le substrat de déchets à traiter dans le tambour (2) sont constitués par un transporteur à bande dont l'une des extrémités est située en regard de l'orifice d'entrée du tambour rotatif (2).

5. Dispositif selon la revendication 3, caractérisé en ce que les moyens pour évacuer les déchets traités sont constitués par un transporteur à bande situé sous la base du tambour rotatif (2) et dont l'une des extrémités est placée au-dessus du moyen d'humidification différentielle.

6. Dispositif selon la revendication 3, caractérisé en ce que les parois du tambour (2) comportent une pluralité d'orifices (4) régulièrement espacés et disposés suivant les génératrices de ce tambour (2) et dont la dimension et la forme sont telles qu'elles permettent un calibrage du substrat de déchets à traiter.

7. Dispositif selon la revendication 3, caractérisé en ce que les moyens mécaniques de chauffage (5) sont constitués par des tubes (5a), fixés à la surface interne de la partie amont, suivant des génératrices de ce tambour (2) décalées de celles où sont ménagés des orifices (4), chacun de ces tubes (5a) comportant des éléments électriquement résistifs.

8. Dispositif selon la revendication 3, caractérisé en ce que les moyens mécaniques de chauffage (5) sont constitués par des tubes (5a) dans lesquels circule un fluide caloporteur.

9. Dispositif selon la revendication 3, caractérisé en ce qu'une chaîne (6) sans fin, munie de dents, est placée dans un carter (7) de profil adapté, dans la partie amont du tambour (2) parallèlement aux éléments chauffants (5a), de manière à permettre l'arrachage de ces fragments et leur entraînement à l'extérieur du tambour (2), de telle façon qu'ils ne tombent pas sur les moyens mécaniques d'entraînement des déchets traités et calibrés.

10. Dispositif selon la revendication 3, caractérisé en ce qu'une brosse (8) placée dans la partie amont du tambour (2) permet de nettoyer les éventuels fragments de matière synthétique qui n'auraient pas été arrachés.

11. Dispositif selon la revendication 3, caractérisé en ce qu'un brûleur (9), dont la température est adaptée, est disposé à l'extrémité amont du tambour (2) de manière à détruire les fragments de matière synthétique.

12. Dispositif selon la revendication 3, caractérisé en ce que les moyens mécaniques de broyage de matière légère, offrant la plus grande densité tout en ayant une surface de contact importante, sont constitués par au moins deux arbres rotatifs (10,12) situés dans la partie aval du tambour rotatif (2), l'un (10) portant des fouets collecteurs (11) régulièrement disposés sur toute sa longueur, l'autre (12), placé par rapport au premier de telle manière qu'il évite tout contact avec ce premier axe (10), portant des couteaux (13) faisant saillie et régulièrement disposés sur toute sa longueur.

13. Dispositif selon la revendication 12, caractérisé en ce que la distance relative existant entre chaque fouet (14) et chaque couteau occupant une disposition en quinconce est telle qu'elle autorise un broyage calibré des matériaux de manière à permettre leur sortie ultérieure par les orifices (4) correspondants, ménagés dans la paroi (3) du tambour (2).

14. Dispositif selon la revendication 12, caractérise en ce que les fouets (11) sont réalisés en un matériau souple et élastique.

15. Dispositif selon la revendication 14, caractérisé en ce que ce matériau souple et élastique est un fil d'acier torsadé.

16. Dispositif selon la revendication 12, caractérisé en ce que l'extrémité de chaque fouet est munie de massette terminale (26).

17. Dispositif selon la revendication 12, caractérisé en ce que les fouets (11) ont une longueur croissante depuis l'extrémité la plus proche des éléments chauffants (5a) jusqu'à celle en regard de l'ouverture de sortie du tambour rotatif.

18. Dispositif selon la revendication 3, caractérisé en ce que des moyens mécaniques de tri magnétique (15), situés à l'extrémité du transporteur à bande qui convoie les déchets traités et calibrés, permettent de retenir d'éventuelles particules métalliques qui sont indésirables pour l'opération ultérieure de lombricompostage.

19. Dispositif selon la revendication 3, caractérisé en ce qu'un dispositif d'humidification différentielle (17), situé sous le dispositif de tri magnétique (15), permet une humidification des déchets calibrés, sous la forme de particules, par l'intersection de la trajectoire rectiligne de ces particules qui tombent sous l'effet de la gravité avec le cône du flux de liquide émis, suivant un angle et avec une trajectoire parabolique, par une buse (19).

20. Dispositif selon la revendication 3, caractérisé en ce que des moyens mécaniques de réception et d'évacuation constitués par un tapis roulant (20) incliné d'un angle avec la verticale, reçoivent les particules de manière à permettre le rebond différentiel de ces particules les plus lourdes, suivant le même angle vers l'aval, tandis que les particules les plus légères, et qui ont une grande surface d'humidification, plus importante, viennent se coller sur ce tapis (20) et sont entraînés vers l'extrémité amont de celui-ci.

21. Dispositif selon la revendication 3, caractérisé en ce qu'un séparateur (22) constitué par une plaque recourbée permet, en fonction des diverses fractions plus ou moins collées à la surface du tapis roulant (20), une meilleure séparation des déchets traités.

## Claims

1. Process for the treatment of waste substances for the purposes of recovering organic matter, consisting:
- in introducing, by suitable mechanical means, the substrate of waste substances to be treated, in a rotating treatment drum,
- in opening, by thermal fusion, the various packages containing this substrate,
- in separating the fine elements of this substrate by screening,
- in selectively fragmenting the coarse residues from the first sizing,
- in separating these residues by screening,
- in separating all of the screened fragments by means of magnetic sorting,
- in wetting these screened fragments,
- in sorting these fragments by means of differential rebound and aqueous adherence and
- in removing, by mechanical means, the substrate of screened waste substances.

2. Process according to Claim 1, characterized in that it consists:
- in introducing, by suitable mechanical means, the substrate of waste substances to be treated at the inlet end of a rotating drum,
- in opening, by thermal fusion, the various packages containing this substrate,
- in separating the fine elements of this substrate by screening,
- in fragmenting those of the coarse residues from the first sizing which are capable of being fragmented,
- in separating these residues by screening,
- in separating all of the screened fragments by means of magnetic sorting,
- in wetting these screened fragments,
- in sorting these fragments by means of differential rebound and aqueous adherence,
- in removing, by mechanical means, the substrate of screened waste substances, at the outlet end of the rotating drum.

3. Device for the treatment of waste substances for the purposes of recovering organic matter, of the type comprising, in combination, a drum driven in a rotational movement about its axis, the wall of which drum has orifices arranged uniformly along generatrices of this drum, and inside which there are provided means for grinding and shredding certain types of refuse, an endless belt being arranged under the perforated wall of the drum in order to remove the waste substances which have passed through them, characterized in that the rotating drum (2) is placed inside a hopper (1), in that it additionally comprises mechanical means for introducing into the drum (2), and via its open inlet end, the packages containing the substrate of waste substances to be treated, heating means (5) arranged inside the upstream end of the rotating drum (2) in such a way as to permit the opening of the packages by thermal fusion, mechanical fragmentation means (11, 13) arranged inside the drum (2) and in proximity to its downstream end, means for separating the waste substances and wetting means (17) arranged under the open outlet end of the drum, and means for removing these treated waste substances.

4. Device according to Claim 3 characterized in that the means for introducing the substrate of waste substances to be treated into the drum (2) consist of a band conveyor, one of whose ends is situated facing the inlet orifice of the rotating drum (2).

5. Device according to Claim 3, characterized in that the means for removing the treated waste substances consist of a band conveyor situated under the base of the rotating drum (2), and one of whose ends is placed above the differential wetting means.

6. Device according to Claim 3, characterized in that the walls of the drum (2) comprise a plurality of orifices (4) uniformly spaced and arranged along the generatrices of this drum (2) and whose dimension and shape are such that they permit a sizing of the substrate of waste substances to be treated.

7. Device according to Claim 3, characterized in that the mechanical heating means (5) consist of tubes (5a), fixed to the inner surface of the upstream part, along generatrices of this drum (2) which are offset from those where orifices (4) are arranged, each of these tubes (5a) comprising electrically resistive elements.

8. Device according to Claim 3, characterized in that the mechanical heating means (5) consist of tubes (5a) in which a heat-transfer fluid circulates.

9. Device according to Claim 3, characterized in that an endless chain (6), provided with teeth, is placed in a casing (7) of suitable profile in the upstream part of the drum (2) parallel to the heating elements (5a), so as to permit the pick-up of these fragments and their conveying outside the drum (2), in such a way that they do not fall onto the mechanical means for conveying the treated and sized waste substances.

10. Device according to Claim 3, characterized in that a brush (8) placed in the upstream part of the drum (2) makes it possible to clear any fragments of synthetic material which might not have been picked up.

11. Device according to Claim 3, characterized in that a burner (9), whose temperature is made suitable, is arranged at the upstream end of the drum (2) in such a way as to destroy the fragments of synthetic material.

12. Device according to Claim 3, characterized in that the mechanical means for breaking up light matter, affording the greatest density while at the same time having a large contact surface, consist of at least two rotating shafts (10, 12) situated in the downstream part of the rotating drum (2), one (10) carrying collecting whips (11) uniformly spaced along its entire length, the other (12), placed with respect to the first one in such a way that it avoids any contact with this first shaft (10), carrying projecting knives (13) uniformly arranged along its entire length.

13. Device according to Claim 12, characterized in that the relative distance between each whip (14) and each blade occupying a zig-zag arrangement is such that it allows a graded breaking-up of the materials in such a way as to permit their subsequent emergence via the corresponding orifices (4) arranged in the wall (3) of the drum (2).

14. Device according to Claim 12, characterized in that the whips (11) are made of a flexible and elastic material.

15. Device according to Claim 14, characterized in that this flexible and elastic material is a twisted steel wire.

16. Device according to Claim 12, characterized in that the end of each whip is provided with a terminal mallet (26).

17. Device according to Claim 12, characterized in that the whips (11) have a length increasing from the end nearest the heating elements (5a) to that facing the outlet opening of the rotating drum.

18. Device according to Claim 3, characterized in that mechanical means for magnetic sorting (15), situated at the end of the band conveyor which conveys the treated and sized waste substances, permit retention of any metallic particles which are undesirable for the subsequent operation of lumbricid-composting.

19. Device according to Claim 3, characterized in that a differential wetting device (17), situated under the magnetic sorting device (15), permits wetting of the sized waste substances, in the form of particles, by the intersection of the rectilinear trajectory of these particles falling under the action of gravity with the cone of the liquid flow emitted, at an angle and with a parabolic trajectory, by a nozzle (19).

20. Device according to Claim 3, characterized in that mechanical receiving and removing means, consisting of a conveyor belt (20) inclined at an angle to the vertical, receive the particles in such a way as to permit the selective rebound of the heaviest of these particles, following the same angle downstream, while the particles which are lightest, and which have a greater wetting surface, adhere to this belt (20) and are conveyed towards the upstream end of the latter.

21. Device according to Claim 3, characterized in that a separator (22) consisting of a bent plate permits a better separation of the treated waste substances, as a function of the various fractions adhering to a greater or lesser extent to the surface of the conveyor belt (20).

## Patentansprüche

1. Verfahren zur Behandlung von Abfällen zur Rückgewinnung organischer Stoffe, beinhaltend:
ein Einbringen des Substrates der zu behandelnden Abfälle mittels geeigneter mechanischer Mittel in eine rotierende Behandlungstrommel,
ein Öffnen der diversen, das Substrat beinhaltenden Verpackungen durch thermisches Schmelzen,
ein Trennen der Feinbestandteile des Substrates durch Sieben,
ein selektives Zerkleinern der Grobrückstände der ersten Größentrennung,
ein Trennen dieser Rückstände durch Sieben,
ein Trennen der Gesamtheit der gesiebten Fragmente durch magenetisches Sortieren,
ein Befeuchten dieser gesiebten Fragmente,
ein Trennen dieser Segmente durch differentiellen Abprall und wässeriges Aneinanderkleben und
ein Evakuieren des Substrates der gesiebten Abfälle durch mechanische Mittel.

2. Verfahren nach Anspruch 1, dadurch gekennzeichnet, daß es beinhaltet:
ein Einbringen des Substrates der zu behandelnden Abfälle mittels geeigneter mechanischer Mittel an dem Einlaßende einer drehenden Trommel,
ein Öffnen der diversen, das Substrat beinhaltenden Verpackungen durch thermisches Schmelzen,
das Trennen der Feinbestandteile des Substrates durch Sieben,
das Zerkleinern der dazu befähigten Grobrückstände der ersten Größentrennung,
ein Trennen dieser Rückstände durch Sieben,
ein Trennen der Gesamtheit der gesiebten Fragmente durch magnetisches Sortieren,
ein Befeuchten dieser gesiebten Fragmente,
ein Sortieren dieser Segmente durch differentiellen Abprall und wässeriges Zusammenkleben,
ein Evakuieren des Substrates der gesiebten Abfälle durch mechanische Mittel am Auslaßende der drehenden Trommel.

3. Vorrichtung für die Behandlung von Abfällen zur Wiedergewinnung organischer Stoffe, des Typs beinhaltend, in Kombination, eine in einer Drehbewegung um ihre Achse angetriebene Trommel, deren Wand Perforationen aufweist, die gleichmäßig gemäß Mantellinien dieser Trommel angeordnet sind und in derem Inneren Mittel vorgesehen sind, um gewisse Abfälle zu zermahlen und zu zerreißen, wobei ein Endlosband unter der perforierten Trommelwand angeordnet ist, um die dort hindurchgetretenen Abfälle abzuführen, dadurch gekennzeichnet, daß die drehbare Trommel (2) im Inneren eines Trichterbunkers (1) angeordnet ist und daß sie ferner mechanische Mittel aufweist, um in die Trommel (2) und durch deren offenes Eingangsende Verpackungen einzuführen, die das Substrat der zu behandelnden Abfälle beinhalten und Heizmittel (5) im Inneren des oberstromigen Endes der drehenden Trommel (2) angeordnet sind derart, daß sie das Öffnen der Verpackungen durch thermische Schmelzung ermöglichen, ferner mechanische Zerkleinerungsmittel (11, 13) im Inneren der Trommel (2) und in der Nähe des unterstromigen Endes der Trommel (2) angeordnet sind, wobei Mittel zur Trennung der Abfälle und Mittel zur Befeuchtung (17) unter dem offenen Auslaßende der Trommel angeordnet sind und ferner Mittel zum Entfernen dieser behandelten Abfälle vorgesehen sind.

4. Vorrichtung nach Anspruch 3, dadurch gekennzeichnet, daß die Mittel zum Einführen des Substrates der zu behandelnden Abfälle in die Trommel (2) durch ein Transportband gebildet sind, dessen eines Ende der Einlaßöffnung der drehenden Trommel (2) gegegnüberliegt.

5. Vorrichtung nach Anspruch 3, dadurch gekennzeichnet, daß die Mittel zum Abfördern der behandelten Abfälle durch ein Transportband gebildet sind, das unter der Basis der drehbaren Trommel (2) liegt und deren eines Ende über den Mitteln für eine differentielle Befeuchtung angeordnet ist.

6. Vorrichtung nach Anspruch 3, dadurch gekennzeichnet, daß die Wände der Trommel (2) eine Mehrzahl von Öffnungen (4) in regelmäßigen Abständen und gemäß der Mantellinien dieser Trommel (2) angeordnet aufweisen, deren Abmessung und Form derart gewählt sind, daß sie eine Größentrennung des Substrates der zu behandelnden Abfälle ermöglichen.

7. Vorrichtung nach Anspruch 3, dadurch gekennzeichnet, daß die mechanischen Heizmittel (5) durch Rohre (5a) gebildet sind, die an der inneren Wandfläche des oberstromigen Bereiches gemäß Mantellinien dieser Trommel (2), versetzt zu denjenigen Mantellinien, in denen die Öffnungen (4) vorgesehen sind, angeordnet sind, wobei jedes dieser Rohre (5a) elektrische Widerstandselemente trägt.

8. Vorrichtung nach Anspruch 3, dadurch gekennzeichnet, daß die mechanischen Heizmittel (5) durch Rohre (5a) gebildet sind, in denen ein flüssiges Wärmeübertragungsmittel zirkuliert.

9. Vorrichtung nach Anspruch 3, dadurch gekennzeichnet, daß eine Endloskette (6), versehen mit Zähnen, in einem dem Gehäuse (7) angepaßten Profil im oberstromigen Bereich der Trommel (2) parallel zu den Heizelementen (5a) angeordnet ist, derart, daß sie ein Abziehen dieser Fragmente und deren Förderung aus der Trommel (2) heraus gewährleisten, derart, daß sie nicht auf die mechanischen Antriebsmittel der behandelten und größensortierten Abfälle fallen.

10. Vorrichtung nach Anspruch 3, dadurch gekennzeichnet, daß eine im oberstromigen Bereich der Trommel (2) angeordnete Bürste (8) ein Reinigen von eventuellen Fragmenten synthetischen Materiales, die nicht abgezogen worden sind, gewährleistet.

11. Vorrichtung nach Anspruch 3, dadurch gekennzeichnet, daß ein Brenner (9), dessen Temperatur entsprechend eingestellt ist, am oberstromigen Ende der Trommel (2) derart angeordnet ist, daß die Fragmente synthetischen Materiales zerstört werden.

12. Vorrichtung nach Anspruch 3, dadurch gekennzeichnet, daß die mechanischen Mittel für das Zermahlen von Leichtstoff, der die größte Dichte hat und dabei eine bedeutende Kontaktoberfläche hat, durch mindestens zwei drehbare Wellen (10, 12) gebildet sind, die im unterstromigen Bereich der drehbaren Trommel (2) liegen, wobei eine (10) sammelnde Treiber (11) trägt, die gleichmäßig über ihre ganze Länge angeordnet sind, während die andere (12) angeordnet ist bezüglich der ersten derart, daß sie jeglichen Kontakt mit dieser ersten Achse (10) vermeidet, vorspringende Messer (13) trägt, die gleichmäßig über ihre ganze Länge angeordnet sind.

13. Vorrichtung nach Anspruch 12, dadurch gekennzeichnet, daß der Relativabstand zwischen jedem Treiber (14) und jedem Messer, das dazu eine zick-zack-förmige Versatzlage hat, derart ist, daß es ein kalibriertes Zermahlen der Stoffe ermöglicht derart, daß ihr späterer Auslaß aus den Öffnungen (4), die in der Wand (3) der Trommel (2) vorgesehen ist, ermöglicht ist.

14. Vorrichtung nach Anspruch 12, dadurch gekennzeichnet, daß die Treiber (11) aus einem verformbaren und elastischen Material bestehen.

15. Vorrichtung nach Anspruch 14, dadurch gekennzeichnet, daß das verformbare und elastische Material ein verdrillter Stahldraht ist.

16. Vorrichtung nach Anspruch 12, dadurch gekennzeichnet, daß das Ende eines jeden Treibers mit einem Schlägel (26) versehen ist.

17. Vorrichtung nach Anspruch 12, dadurch gekennzeichnet, daß die Treiber (11) eine wachsende Länge von dem den Heizelementen (5a) am nächsten liegenden Ende bis zu demjenigen Ende, das der Auslaßöffnung der drehbaren Trommel gegenüberliegt, haben.

18. Vorrichtung nach Anspruch 3, dadurch gekennzeichnet, daß mechanische Mittel der magnetischen Trennung (15), die am Ende des Transportbandes liegen, das die behandelten und größengetrennten Abfälle fördert, das Rückhalten eventueller Metallpartikel gewährleisten, die für die nachfolgende Operation der Wurmkompostierung unerwünscht sind.

19. Vorrichtung nach Anspruch 3, dadurch gekennzeichnet, daß eine Vorrichtung für eine differentielle Befeuchtung (17), die unter der Vorrichtung der magnetischen Sortierung (15) liegt, eine Befeuchtung der größengetrennten Abfälle unter Partikelform durch Intersektion der geradlinigen Wegbahn dieser Partikel ermöglicht, die unter Schwerkraft mit dem Strömungskegel der Flüssigkeit fallen, die in einem Winkel und mit parabolischer Wegbahn von einer Düse (19) abgegeben werden.

20. Vorrichtung nach Anspruch 3, dadurch gekennzeichnet, daß mechanische Mittel der Aufnahme und der Abförderung, die durch ein laufendes Band (20), das geneigt in einem Winkel zur Vertikalen angeordnet ist, gebildet sind, die Partikel empfängt derart, daß es den differentiellen Abprall der schwereren dieser Partikel ermöglicht, und zwar im gleichen Winkel nach hinten, während die leichteren Partikel, die eine große, bedeutendere Befeuchtungsoberfläche haben, an dem Band (20) ankleben und von ihm zu seinem oberstromigen Ende mitgenommen werden.

21. Vorrichtung nach Anspruch 3, dadurch gekennzeichnet, daß ein Separator (22), gebildet durch eine gebogene Platte, es in Abhängigkeit der verschiedenen mehr oder weniger stark an der Oberfläche des laufenden Bandes (20) eine bessere Trennung der behandelten Abfälle ermöglicht.
